# EUROPÄISCHE PATENTSCHRIFT

(11) **EP 2 234 852 B1**
(45) Veröffentlichungstag und Bekanntmachung des Hinweises auf die Patenterteilung: **13.12.2017**
(21) Anmeldenummer: 08862636.1
(22) Anmeldetag: 23.10.2008
(51) Int. Cl.: B60T 8/36, F15B 1/04, F16F 1/08

(54) **DRUCKSPEICHER, INSBESONDERE FÜR EIN HYDROAGGREGAT EINER HYDRAULISCHEN FAHRZEUGBREMSANLAGE MIT ELEKTRONISCHER RADSCHLUPFREGELUNG**
PRESSURE ACCUMULATOR, ESPECIALLY FOR A HYDRAULIC UNIT OF A HYDRAULIC VEHICLE BRAKING SYSTEM WITH ELECTRONIC WHEEL SLIP REGULATION
ACCUMULATEUR DE PRESSION, EN PARTICULIER POUR UNE UNITÉ HYDRAULIQUE D'UN SYSTÈME HYDRAULIQUE DE FREINAGE DE VÉHICULE À RÉGULATION ANTIPATINAGE ÉLECTRONIQUE

(30) Priorität: 18.12.2007 DE 102007060951
(43) Veröffentlichungstag der Anmeldung: 06.10.2010
(73) Patentinhaber: Robert Bosch GmbH, 70442 Stuttgart (DE)
(72) Erfinder: BAREISS, Alexander, 87509 Immenstadt (DE); MERKLEIN, Dieter, 88145 Schwarzenberg (DE); WEH, Andreas, 87477 Sulzberg (DE); FISCHER, Holger, 87490 Haldenwang (DE); SEGAWA, Taro, 87527 Sonthofen (DE)
(86) Internationale Anmeldenummer: PCT/EP2008/064399
(87) Internationale Veröffentlichungsnummer: WO 2009/077249

(56) Entgegenhaltungen:
- WO-A-2004/113141
- DE-A1- 10 236 966
- US-A- 3 302 530

## Beschreibung

### Stand der Technik

Die Erfindung betrifft einen Druckspeicher, insbesondere für ein Hydroaggregat einer hydraulischen Fahrzeugbremsanlage mit elektronischer Radschlupfregelung entsprechend den gattungsbildenden Merkmalen des Anspruchs 1. Ein derartiger Druckspeicher ist beispielsweise bekannt durch die Offenbarungen in der DE 102 36 966 A1 oder in der DE 199 42 293 A1. Diese Druckspeicher umfassen jeweils eine Speicherkammer, einen in der Speicherkammer beweglich geführten Speicherkolben, eine den Speicherkolben beaufschlagende Kolbenfeder und einen Deckel, welcher die Speicherkammer zur Umgebung hin verschließt und an dem die Kolbenfeder abgestützt ist.

Als Kolbenfeder wird eine Spiralfeder mit mehreren Federwindungen eingesetzt. Alle Federwindungen haben einheitlich den selben Außendurchmesser. Die Federwindungen an den Enden der Kolbenfeder sind angeschliffen und an die sich unmittelbar anschließenden Federwindungen angelegt.

Kolbenfedern mit angeschliffenen Enden sind relativ teuer in der Herstellung.

Zudem bestimmt insbesondere die Blocklänge einer Kolbenfeder die Abmessungen einer Speicherkammer. Da diese Speicherkammer durch spanende Bearbeitung des Gehäuseblocks hergestellt wird, fällt entweder relativ viel Zerspanungsaufwand in Form von Werkzeugeinsatz und zerspantem Material an oder der Druckspeicher ragt abschnittsweise über den Umriss des Gehäuseblocks hinaus und ist dadurch gegen mechanische Beschädigungen ungeschützt. Große Speicherkammern haben entsprechend dimensionierte Gehäuseblöcke und Hydroaggregate zur Folge. Insbesondere im Fahrzeugbau ist jedoch die Robustheit und die Kompaktheit der Baueinheiten mangels von zur Verfügung stehendem Einbauraum besonders bedeutsam.

Weiterhin ist aus der US 3,302,530 eine Bremsbetätigungseinrichtung bekannt, bei der in einem Zylinder ein Kolben von einer Kolbenfeder beaufschlagt ist, deren erste Federwindungen in ihrem Außendurchmesser kleiner sind, als der Innendurchmesser der sich unmittelbar daran anschließenden zweiten Federwindungen.

### Vorteile der Erfindung

Demgegenüber hat ein Druckspeicher gemäß den kennzeichnenden Merkmalen des Anspruchs 1 den Vorteil geringerer Teilekosten durch den Einsatz kostengünstigerer nicht überschliffener Kolbenfedern. Die erfindungsgemäß vorgeschlagenen Kolbenfedern weisen zudem ein geringeres Blockmaß auf, so dass Druckspeicher bei unveränderten Funktionseigenschaften mit kompakteren Abmessungen darstellbar sind. Kompaktere Abmessungen sparen Zerspanungsaufwand und Materialeinsatz am Gehäuseblock ein, ermöglichen Hydroaggregate mit geringerem Bauvolumen und lassen zudem die Integration eines Druckspeichers im Gehäuseblock zu, so dass der Druckspeicher gegen mechanische Beschädigungen von außen geschützt ist.

Weitere Vorteile oder vorteilhafte Weiterbildungen der Erfindung ergeben sich aus den Unteransprüchen und der nachfolgenden Beschreibung.

### Zeichnungen

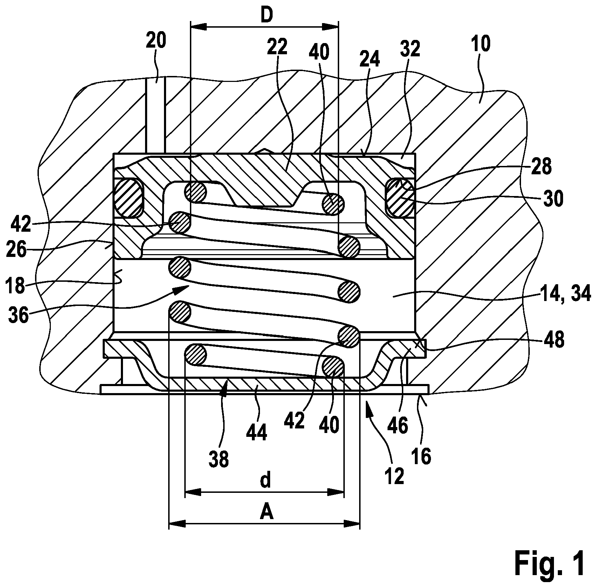

Ein Ausführungsbeispiel der Erfindung ist in der Zeichnung dargestellt und in der nachfolgenden Beschreibung detailliert erläutert. Die einzige Figur zeigt einen erfindungsgemäßen Druckspeicher im Längsschnitt.

### Beschreibung des Ausführungsbeispiels

Die einzige Figur zeigt einen Ausschnitt eines Gehäuseblocks 10 mit einem erfindungsgemäßen Druckspeicher 12. Eine Speicherkammer 14 dieses Druckspeichers 12 geht von einer Außenseite 16 des Gehäuseblock 10 aus und erstreckt sich in das Innere des Gehäuseblocks 10 hinein. Die Speicherkammer 14 wird von einer sacklochförmigen Ausnehmung 18 gebildet, die durch Zerspanung des Gehäuseblocks 10 hergestellt wurde. Über eine Kanalbohrung 20 am Grund dieser Ausnehmung 18 ist der Druckspeicher 10 mit einem Hydraulikkreis der Fahrzeugbremsanlage kontaktiert.

Im Inneren der Speicherkammer 14 ist ein Speicherkolben 22 axial verschiebbar geführt. Dieser Speicherkolben 22 ist als Hohlkolben ausgeführt und weist einen geschlossenen Kolbenboden 24 und eine einstückig damit verbundene, umlaufende Ringwand 26 auf. Am Umfang dieser Ringwand 26 ist eine nach außen offene Dichtungsnut 28 ausgebildet, in die ein Dichtungsring 30 eingesetzt ist. Der Speicherkolben 22 dichtet damit einen mit Druckmittel beaufschlagbaren Druckraum 32 gegen einen druckmittelfreien Einbauraum 34 ab. Das Kolbeninnere ist im Durchmesser einmal abgesetzt, so dass die Kolbenringwand 26 an ihrem dem Kolbenboden 24 zugewandten Ende einen größeren Querschnitt aufweist als an ihrem davon abgewandten einbauraumseitigen Ende.

Im Einbauraum 34 ist eine Kolbenfeder 36 untergebracht. Diese ragt abschnittsweise in das Innere des Speicherkolbens 22 hinein und stützt sich mit ihrem einen Ende auf der Innenseite des Kolbenbodens 24 ab. Mit ihrem gegenüberliegenden zweiten Ende liegt die Kolbenfeder 36 an einem Deckel 38 an, welcher fest am Gehäuseblock 10 verankert ist und die Speicherkammer 14 nach außen verschließt.

Die Kolbenfeder weist exemplarisch fünf Federwindungen auf, wobei die beiden endseitigen, ersten Federwindungen 40 einen einheitlich großen Außendurchmesser d haben, der kleiner ist als der Innendurchmesser D der sich an diese ersten Federwindungen unmittelbar anschließenden zweiten Federwindungen 42. Die ersten Federwindungen 40 sind derat an die zweiten Federwindungen 42 angelegt, dass sich ihre Federenden nicht mit den zweiten Federwindungen 42 nicht verhaken können. Diese zweiten Federwindungen 42 haben gemäß dem dargestellten Ausführungsbeispiel ebenfalls einen einheitlich großen Außendurchmesser A. Weiterhin wäre es denkbar, zwischen den zweiten Federwindungen 42 noch wenigstens eine dritte Federwindung (nicht gezeichnet) vorzusehen, deren Außendurchmesser gegenüber dem Außendurchmesser der zweiten Federwindungen 42 nochmals vergrößert ist.
Die die Enden der Kolbenfeder 36 bildenden ersten Federwindungen 40 haben keine angeschliffene Drahtenden. Damit weist die Kolbenfeder 36 durchgehend von ihrem einen Ende zum anderen Ende einen einheitlichen Drahtquerschnitt auf.

Die axiale Ausdehnung der Kolbenringwand 26 und ihre abgesetzte Innenkontur ist derart ausgebildet, dass bei maximal belasteter Kolbenfeder 36 wenigstens eine der Federwindungen mit größtem Außendurchmesser eine Position im Inneren des Speicherkolbens 22 einnimmt. Bei maximaler Druckbeaufschlagung des Druckspeichers 12 ist die Kolbenfeder 36 auf Block gedrückt. Dabei befinden sich die ersten Federwindungen 40 aufgrund ihres reduzierten Außendurchmessers innerhalb der zweiten Federwindungen 42 und leisten damit keinen Beitrag zur Vergrößerung der Blocklänge der Kolbenfeder 36. Druckspeicher 12 mit erfindungsgemäß ausgestalteten Kolbenfedern 36 weisen gegenüber Druckspeichern, die mit konventionellen Kolbenfedern bestückt sind, bei einheitlichem Volumen ihrer Druckkammern 32 eine verringerte Baulänge auf. Sie lassen sich deshalb vollständig in den Gehäuseblock 10 eines Hydroaggregats integrieren.

Der eingesetzte Deckel 38 ist napfförmig ausgebildet und weist einen umlaufenden, gegenüber einem Deckelboden 44 axial vorstehenden Rand 46 auf. Dieser Rand 46 liegt an einer die Speicherkammer 34 umschließenden Schulter 48 des Gehäuseblocks 10 auf. Letztere wird von einer Flachsenkung gebildet, die derart tief im Inneren des Gehäuseblocks 10 endet, dass im verbördelten Zustand der Deckelboden 44 nicht über die Außenseite 16 des Gehäuseblocks 10 vorsteht. Vorzugsweise sollte der Deckel 38 bündig mit der Außenseite 16 abschließen. Im Vergleich zu konventionellen Druckspeichern mit Federn, die angeschliffene Enden und Federwindungen mit einheitlichen Außendurchmessern aufweisen, sind erfindungsgemäße Druckspeicher mit Deckeln 38 ausrüstbar, die verhältnismäßig flach und deshalb ebenfalls kostengünstiger herstellbar sind.

Eine Verankerung des Deckels 38 des Druckspeichers 12 am Gehäuseblock 10 erfolgt umformtechnisch, beispielsweise durch Bördeln, axiales Verstemmen, Taumeln oder Rollieren. Dabei wird Material des Gehäuseblocks plastisch derart verformt, dass es den Deckel 38 in radialer Richtung wenigstens abschnittsweise überdeckt. Für viele Anwendungen ist es ausreichend, von einer geschlossenen, den Druckspeicher 12 umschließenden Materialverformung abzusehen und lediglich mehrere entlang des Umfangs dieses Deckels 38 verteilt angeordnete Segmente zu verbördeln oder zu verstemmen.

Selbstverständlich sind Änderungen oder Ergänzungen am beschriebenen Ausführungsbeispiel denkbar, ohne vom Grundgedanken der Erfindung abzuweichen.

## Patentansprüche

1. Druckspeicher (12), insbesondere für ein Hydroaggregat einer hydraulischen Fahrzeugbremsanlage mit elektronischer Schlupfregelung, mit einer Speicherkammer (14), mit einem Speicherkolben (22), der verschieblich in der Speicherkammer (14) angeordnet ist und einen mit hydraulischem Druckmittel befüllbaren Druckraum (32) gegenüber einem druckmittelfreien Einbauraum (34) abdichtet,
mit einer den Speicherkolben (22) beaufschlagenden und im Einbauraum (34) angeordneten Kolbenfeder (36), die in Form einer Spiralfeder ausgebildet ist und mehrere Federwindungen aufweist und
mit einem, den Einbauraum (34) zur Umgebung verschließenden Deckel (38), an dem die Kolbenfeder (36) mit einem ihrer Enden abgestützt ist, **dadurch gekennzeichnet, dass** die Kolbenfeder (36) wenigstens eine erste Federwindung (40) aufweist, deren Außendurchmesser (d) kleiner ist, als der Innendurchmesser (D) einer sich an diese erste Federwindung (40) unmittelbar anschließenden zweiten Federwindung (42) und dass die Kolbenfeder (36) durchgehend von einem Ende bis zum anderen Ende einen einheitlichen Drahtquerschnitt aufweist.

2. Druckspeicher nach Anspruch 1, **dadurch gekennzeichnet,**
**dass** die wenigstens eine erste Federwindung (40) an einem Ende der Kolbenfeder (36) angeordnet ist.

3. Druckspeicher nach Anspruch 1 oder 2, **dadurch gekennzeichnet,**
**dass** die Kolbenfeder (36) erste, im Außendurchmesser verkleinerte Federwindungen (40) an ihren beiden Enden aufweist, wobei diese ersten Federwindungen (40) einen einheitlichen Außendurchmesser (d) haben und
**dass** die sich an diese ersten Federwindungen (40) unmittelbar anschließenden zweiten Federwindungen (42) einheitlich einen gegenüber diesem Außendurchmesser (d) größeren Außendurchmesser (A) aufweisen.

4. Druckspeicher nach einem der Ansprüche 1 bis 3, **dadurch gekennzeichnet, dass** zwischen den zweiten Federwindungen (42) wenigstens eine dritte Federwindung mit demgegenüber größerem Außendurchmesser vorgesehen ist.

5. Druckspeicher nach einem der Ansprüche 1 bis 4, **dadurch gekennzeichnet, dass** die Speicherkammer (14) in Form einer sacklochförmigen Ausnehmung (18) am Gehäuseblock (10) eines Hydroaggregats ausgebildet ist und
dass der die Speicherkammer (14) verschließende Deckel (38) gegenüber einer Außenseite (16) des Gehäuseblocks (10) vertieft angeordnet ist oder bündig mit der Außenseite (16) des Gehäuseblocks (10) abschließt.

6. Druckspeicher nach einem der Ansprüche 1 bis 5 , **dadurch gekennzeichnet dass** der Deckel (38) napfförmig ausgebildet ist und einen Deckelboden (44) und einen demgegenüber axial vorstehenden umlaufenden Rand (46) aufweist und
dass der Deckel (38) durch plastische Verformung von Material des Gehäuseblocks (10) an diesem Gehäuseblock (10) verankert ist.

7. Druckspeicher nach einem der Ansprüche 1 bis 6, **dadurch gekennzeichnet, dass** der Speicherkolben (22) als Hohlkolben mit einem Kolbenboden (24) und einer damit einstückigen, umlaufenden Ringwand (26) ausgebildet ist und
dass die Kolbenfeder (36) wenigstens abschnittsweise in das hohle Innere des Speicherkolbens (22) eintaucht.

8. Druckspeicher nach Anspruch 7, **dadurch gekennzeichnet,**
**dass** sich der Querschnitt der Ringwand (26) des Speicherkolbens (22) ausgehend vom Kolbenboden (24) verjüngt und dass die Kolbenfeder (36) wenigstens bei maximaler Belastung mit wenigstens einer ihrer im Außendurchmesser größten Federwindungen (40,42) in das Innere des Speicherkolbens (22) eintaucht.

## Claims

1. Pressure accumulator (12), in particular for a hydraulic assembly of a hydraulic vehicle brake system with electronic slip control, having an accumulator chamber (14), having an accumulator piston (22) which is arranged displaceably in the accumulator chamber (14) and seals a pressure space (32) which can be filled with hydraulic pressure medium with respect to an installation space (34) which is free from pressure medium, having a piston spring (36) which loads the accumulator piston (22), is arranged in the installation space (34), is configured in the form of a helical spring and has a plurality of spring windings, and having a cover (38) which closes the installation space (34) in the direction of the surroundings and on which the piston spring (36) is supported with one of its ends, **characterized in that** the piston spring (36) has at least one first spring winding (40), the external diameter (d) of which is smaller than the internal diameter (D) of a second spring winding (42) which adjoins the said first spring winding (40) directly, and **in that** the piston spring (36) has a uniform wire cross section continuously from one end as far as the other end.

2. Pressure accumulator according to Claim 1, **characterized in that** the at least one first spring winding (40) is arranged at one end of the piston spring (36).

3. Pressure accumulator according to Claim 1 or 2, **characterized in that** the piston spring (36) has first spring windings (40) of reduced external diameter at its two ends, the said first spring windings (40) having a uniform external diameter (d), and **in that** the second spring windings (42) which directly adjoin the said first spring windings (40) uniformly have a greater external diameter (A) in comparison with the said external diameter (d).

4. Pressure accumulator according to one of Claims 1 to 3, **characterized in that** at least one third spring winding with a greater external diameter in comparison is provided between the second spring windings (42).

5. Pressure accumulator according to one of Claims 1 to 4, **characterized in that** the accumulator chamber (14) is configured in the form of a blind hole-shaped recess (18) on the housing block (10) of a hydraulic assembly, and **in that** the cover (38) which closes the accumulator chamber (14) is arranged in a depressed manner with respect to an outer side (16) of the housing block (10) or terminates flush with the outer side (16) of the housing block (10).

6. Pressure accumulator according to one of Claims 1 to 5, **characterized in that** the cover (38) is of bowl-shaped configuration, and has a cover bottom (44) and a circumferential edge (46) which projects axially with respect to the former, and **in that** the cover (38) is anchored on the housing block (10) by way of plastic deformation of material of the said housing block (10).

7. Pressure accumulator according to one of Claims 1 to 6, **characterized in that** the accumulator piston (22) is configured as a hollow piston with a piston crown (24) and a circumferential ring wall (26) which is in one piece with the former, and **in that** the piston spring (36) dips at least in sections into the hollow interior of the accumulator piston (22).

8. Accumulator spring according to Claim 7, **characterized in that** the cross section of the ring wall (26) of the accumulator piston (22) tapers, starting from the piston crown (24), and **in that**, at least in the case of maximum loading, the piston spring (36) penetrates with at least one of its spring windings (40, 42) of greatest external diameter into the interior of the accumulator piston (22).

## Revendications

1. Accumulateur de pression (12), en particulier pour une unité hydraulique d'une installation de freinage hydraulique d'un véhicule comprenant une régulation de glissement électronique, comprenant une chambre d'accumulateur (14), avec un piston d'accumulateur (22) qui est disposé de manière déplaçable dans la chambre d'accumulateur (14) et étanchéifie un espace de pression (32) pouvant être rempli avec un fluide hydraulique sous pression vis-à-vis d'un espace d'installation (34) exempt de fluide sous pression,
comprenant un ressort de piston (36) sollicitant le piston d'accumulateur (22) et disposé dans l'espace d'installation (34), qui est réalisé sous la forme d'un ressort spiral et qui présente plusieurs enroulements de ressort et
comprenant un couvercle (38) fermant l'espace d'installation (34) par rapport à l'environnement, au niveau duquel le ressort de piston (36) est supporté par l'une de ses extrémités, **caractérisé en ce que** le ressort de piston (36) présente au moins un premier enroulement de ressort (40) dont le diamètre extérieur (d) est inférieur au diamètre intérieur (D) d'un deuxième enroulement de ressort (42) se raccordant directement à ce premier enroulement de ressort (40) et **en ce que** le ressort de piston (36) présente une section transversale de fil unitaire continue d'une extrémité à l'autre.

2. Accumulateur de pression selon la revendication 1, **caractérisé en ce que** l'au moins un premier enroulement de ressort (40) est disposé à une extrémité du ressort de piston (36).

3. Accumulateur de pression selon la revendication 1 ou 2, **caractérisé en ce que** le ressort de piston (36) présente des premiers enroulements de ressort (40) de diamètre extérieur réduit au niveau de leurs deux extrémités, ces premiers enroulements de ressort (40) ayant un diamètre extérieur unitaire (d) et **en ce que** les deuxièmes enroulements de ressort (42) se raccordant directement à ces premiers enroulements de ressort (40) présentent de manière uniforme un diamètre extérieur (A) supérieur à ce diamètre extérieur (d) .

4. Accumulateur de pression selon l'une quelconque des revendications 1 à 3, **caractérisé en ce qu'**entre les deuxièmes enroulements de ressort (42) est prévu au moins un troisième enroulement de ressort ayant un diamètre extérieur supérieur à ceux-ci.

5. Accumulateur de pression selon l'une quelconque des revendications 1 à 4, **caractérisé en ce que** la chambre d'accumulateur (14) est réalisée sous la forme d'un évidement en forme de trou borgne (18) au niveau du bloc-boîtier (10) d'une unité hydraulique et **en ce que** le couvercle (38) fermant la chambre d'accumulateur (14) est disposé plus au retrait par rapport à un côté extérieur (16) du bloc-boitier (10) ou se termine en affleurement avec le côté extérieur (16) du bloc-boîtier (10).

6. Accumulateur de pression selon l'une quelconque des revendications 1 à 5, **caractérisé en ce que** le couvercle (38) est réalisé en forme de coupelle et présente un fond de couvercle (44) et un bord périphérique (46) saillant axialement par rapport à celui-ci et **en ce que** le couvercle (38) est ancré à ce bloc-boîtier (10) par déformation plastique du matériau du bloc-boîtier (10).

7. Accumulateur de pression selon l'une quelconque des revendications 1 à 6, **caractérisé en ce que** le piston d'accumulateur (22) est réalisé sous forme de piston creux avec un fond de piston (24) et une paroi annulaire périphérique (26) réalisée d'une seule pièce avec celui-ci et **en ce que** le ressort de piston (36) plonge au moins en partie dans l'intérieur creux du piston d'accumulateur (22).

8. Accumulateur de pression selon la revendication 7, **caractérisé en ce que** la section transversale de la paroi annulaire (26) du piston d'accumulateur (22) se rétrécit à partir du fond de piston (24) et **en ce que** le ressort de piston (36) plonge à l'intérieur du piston d'accumulateur (22) en cas de sollicitation maximale avec au moins un de ses enroulements de ressort de plus grand diamètre extérieur (40, 42).
